# EUROPEAN PATENT APPLICATION

(11) **EP 4 571 092 A1**
(43) Date of publication of application: **18.06.2025**
(21) Application number: 24216371.5
(22) Date of filing: 29.11.2024
(51) Int. Cl.: F02M 21/02

(54) **FUEL INJECTOR FOR A GASEOUS FUEL**

(30) Priority: 13.12.2023 IT 202300026607
(71) Applicant: Marelli Europe S.p.A., 20011 Corbetta (MI) (IT)
(72) Inventor: SPIZZIRRI, Armando, 20011 CORBETTA (MI) (IT); ZAMPOLLI, Francesco, 20011 CORBETTA (MI) (IT); PETRONE, Michele, 20011 CORBETTA (MI) (IT)
(74) Representative: Studio Torta S.p.A.

(57) **Abstract**

A fuel injector (1) for a gaseous fuel and having: an injection nozzle (3); a support body (4) with a tubular shape; an injection valve (7), configured to adjust the gaseous fuel flow through the injection nozzle (3) and provided with a movable shutter (9) arranged outside the support body (4) and with a valve seat (10); an actuator (6), configured to move the shutter (9) between a closed position of the injection valve (7) and an open position of the injection valve (7); an elastomeric material gasket (13), which is arranged at the injection valve (7) to obtain the valve seat (10); and an end-of-stroke system (14), which determines the closed position and is separate from and independent of the gasket (13).

## Description

### CROSS-REFERENCE TO RELATED APPLICATIONS

This patent application claims priority from Italian patent application no. 102023000026607 filed on December 13, 2023, the entire disclosure of which is incorporated herein by reference.

### TECHNICAL FIELD

The present invention relates to a fuel injector for a gaseous fuel.

The present invention is advantageously applied to an electromagnetic hydrogen injector, to which the following discussion will explicitly refer without thereby losing generality.

### PRIOR ART

An electromagnetic hydrogen injector comprises a cylindrical tubular support body equipped with a central feeding channel, which acts as fuel duct and ends with an injection nozzle adjusted by an injection valve controlled by an electromagnetic actuator. The injection valve is provided with a needle, which is moved by the action of the electromagnetic actuator between a closed position and an open position of the injection nozzle against the action of a closing spring which pushes the needle towards the closed position. The needle ends with a shutter adapted to rest sealingly against a valve seat of the injection valve.

The most suitable configuration of a hydrogen injector provides for the shutter to open outwards so that the closed position of the shutter is not negatively affected by the pressure which develops in the combustion chamber; namely, when the shutter opens outwards, the pressure which develops in the combustion chamber pushes the shutter towards the closed position and thus it is always ensured that the fuel injector does not have undesired openings caused by a pressure peak in the combustion chamber.

When both the shutter and the valve seat are made of metal, the seal of the injection valve in the long term (namely, after several operating cycles of the injector) can be problematic, as even small wears in the contact zone between the shutter and the valve seat can cause hydrogen leakage. In this regard, it is important to note that hydrogen has a very small molecule, and thus even the smallest cracks can be sufficient for the undesired outflow of hydrogen. Furthermore, it is important to note that hydrogen (unlike hydrocarbon-based liquid fuels) has neither lubricating properties nor hydraulic braking capabilities for mitigating the impact of the shutter against the valve seat; consequently, in a hydrogen injector, the wear at the valve seat and/or at the shutter can be definitely high (and thus the risk that cracks are created in the valve seat and/or shutter is high).

To solve the above-described drawback, it has been proposed to cover the valve seat with a gasket made of an elastic material (namely, with a gasket made of an elastomer) having the function of assuring a hermetical seal (thanks to the capability of the gasket to elastically deform so as to self-adapt to the shape of the shutter). However, it has been noted that the gasket made of elastic material of a hydrogen injector has a rapid wear and thus significantly limits the useful life of the injector.

Patent application DE102014224340A1 and patent application DE102015201392A1 describe an injector for injecting a gaseous fuel directly into the combustion chamber of an internal combustion engine; the injector comprises a closing element of the valve for opening and closing a passage opening, a first metallic or ceramic, and thus elastomer-free, sealing seat, and a second sealing seat with at least one elastomeric sealing element.

Patent US9810179B2 describes an injector for the direct injection of gaseous fuel into a combustion chamber of an internal combustion engine; the injector utilizes two different areas controlled by a valve needle for optimizing the quantity and the features of the injection of gaseous fuel into the internal combustion engine, offering a more efficient control of the combustion and an improved performance of the internal combustion engine.

### DESCRIPTION OF THE INVENTION

The object of the present invention is to provide a fuel injector for a gaseous fuel which is devoid of the above-described drawbacks (namely, ensures a perfect seal also in the long term) and, in particular, is easy and cost-effective to produce.

According to the present invention, a fuel injector for a gaseous fuel is manufactured according to what is stated in the appended claims.

The claims illustrate a preferred embodiment of the present invention being integral part of this description.

### BRIEF DESCRIPTION OF THE DRAWINGS

The present invention will now be described with reference to the accompanying drawings, which illustrate a non-limiting example embodiment thereof, wherein:
- Figure 1 is a side view, partially in section, of a fuel injector; and
- Figures 2 and 3 are two longitudinal section views of an end part of the fuel injector of the respective Figure 1 in a closed position and in an open position; and
- Figure 4 schematically shows an internal combustion engine which utilizes the fuel injector of Figure 1.

### PREFERRED EMBODIMENTS OF THE INVENTION

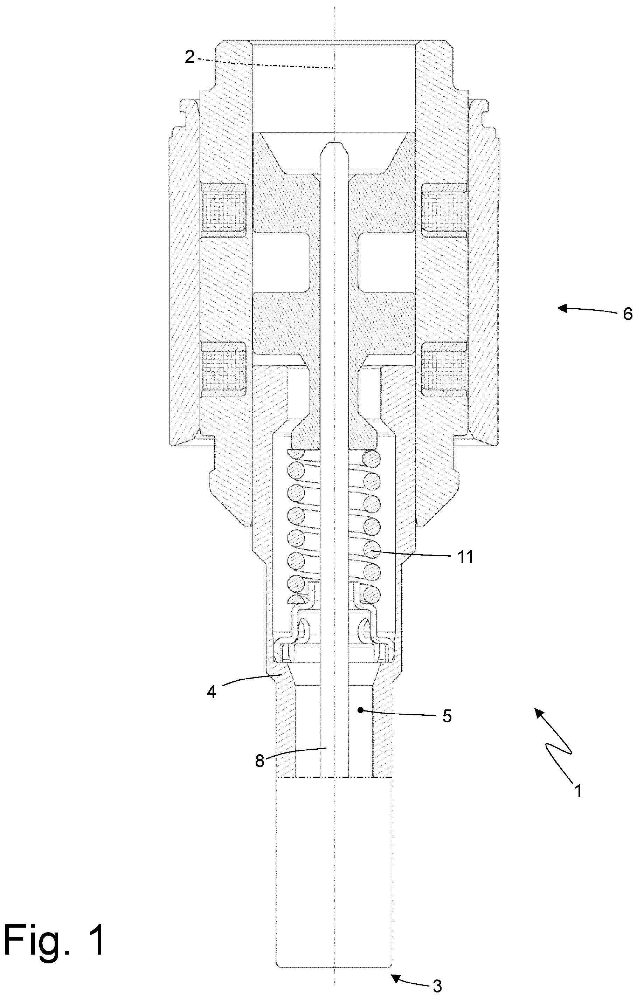

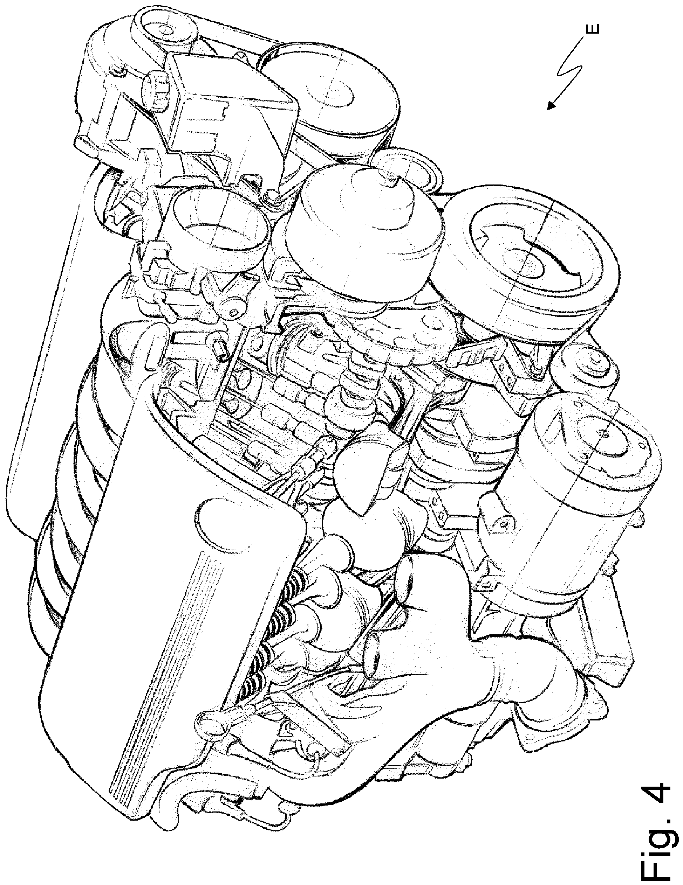

In Figure 1, reference numeral 1 indicates, as a whole, a gaseous fuel (in particular hydrogen) injector, which develops around a longitudinal axis 2 and is adapted to be controlled for injecting hydrogen through an injection nozzle 3 which directly leads into a combustion chamber of a cylinder of an internal combustion engine E (schematically illustrated in Figure 4). Namely, the internal combustion engine E is fed with hydrogen and is provided with an injection system which directly injects hydrogen into a plurality of cylinders utilizing corresponding hydrogen injectors 1; therefore, the internal combustion engine E comprises at least one cylinder and the injection system which directly injects the hydrogen into the cylinder utilizing the fuel (hydrogen) injector 1.

According to what is illustrated in Figure 1, the fuel injector 1 comprises a support body 4, which has a cylindrical tubular shape with a variable section along the longitudinal axis 2 and has a feeding channel 5 extending along the entire length of the support body 4 for feeding the pressurized hydrogen towards the injection nozzle 3.

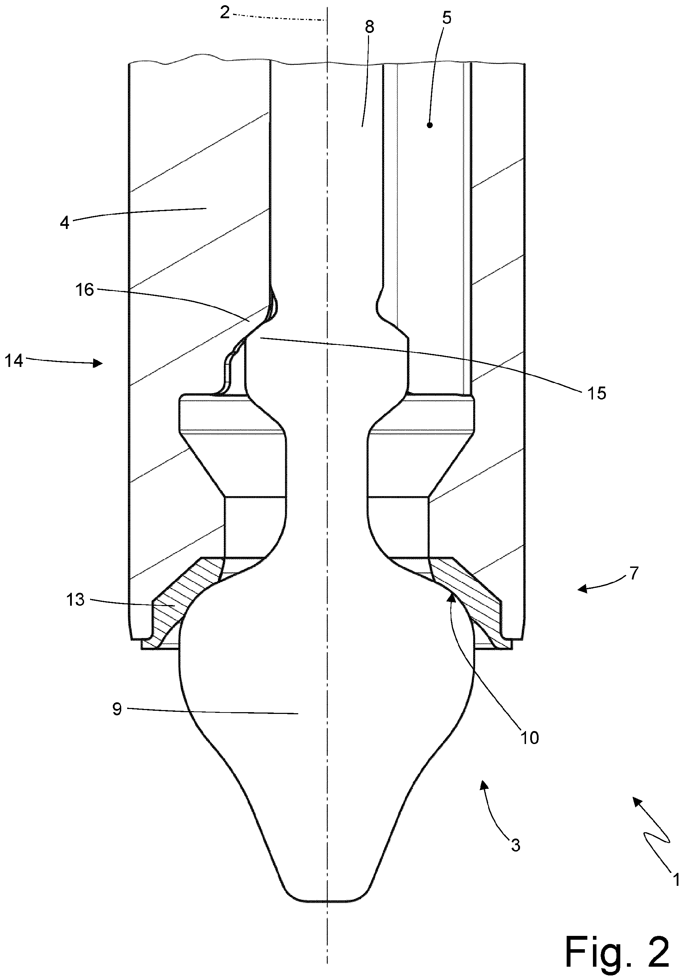

The support body 4 houses an electromagnetic actuator 6 at an upper portion thereof and an injection valve 7 (illustrated in Figure 2) at a lower portion thereof; in use, the injection valve 7 is actuated by the electromagnetic actuator 6 for adjusting the flow of hydrogen through the injection nozzle 3, which is obtained at the injection valve 7. According to a different embodiment not illustrated, the actuator 6 is of piezoelectric type instead of electromagnetic type.

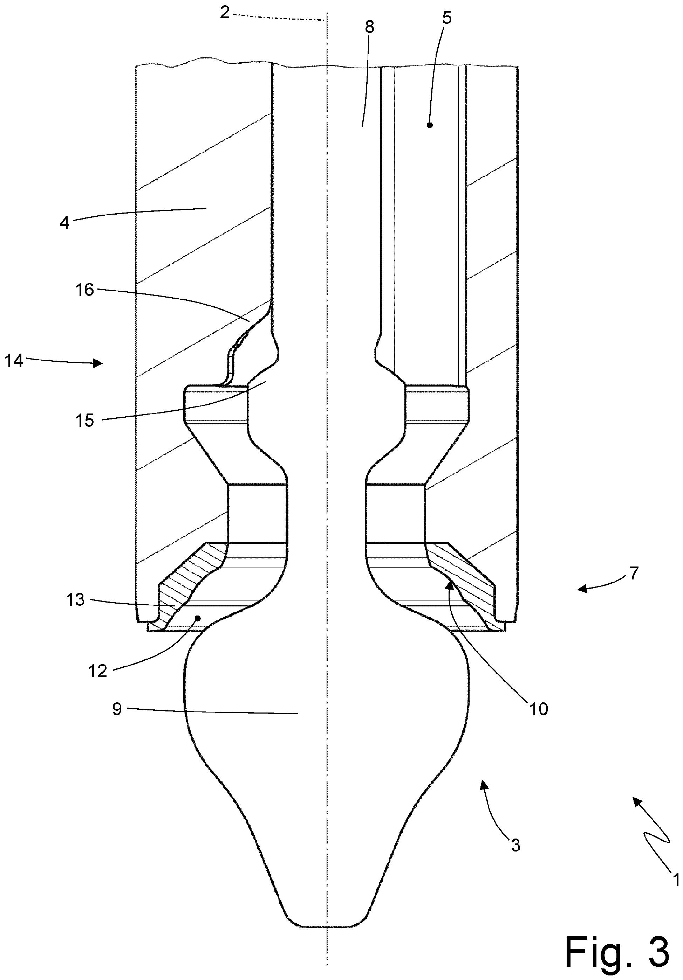

The electromagnetic actuator 6 is configured to axially (namely, along the longitudinal axis 2) move a movable unit provided with a needle 8 ending with a bulb-like shaped shutter 9 (illustrated in Figure 2). The shutter 9 cooperates with a valve seat 10 (illustrated in Figure 2) of the injection valve 7 for adjusting the flow of hydrogen through the injection nozzle 3. In other words, the support body 4 ends with a through opening in which the valve seat 10 is defined and which is engaged by the shutter 9. In particular, the electromagnetic actuator 6 is configured to move the shutter 9 between a closed position (illustrated in Figure 2) and an open position (illustrated in Figure 3) of the injection valve 7. Furthermore, the electromagnetic actuator 6 is provided with a closing spring 11 which normally keeps the fuel injector 1 closed, namely which pushes the shutter 9 towards the closed position of the injection valve 7. In other words, the injection valve 7 is normally closed due to the closing spring 11 which pushes the needle 8 into the closed position, in which the shutter 9 of the needle 8 presses against the valve seat 10 of the injection valve 7.

According to what is illustrated in Figures 2 and 3, the shutter 9 is arranged externally with respect to the support body 4 and is pushed by the closing spring 11 of the electromagnetic actuator 6 against the support body 4; consequently, in order to shift from the closed position to the open position of the injection valve 7, the shutter 9 moves along the longitudinal axis 2 towards the outside of the support body 4, i.e. in a same direction of movement as a hydrogen feeding direction. In the open position of the injection valve 7 (illustrated in Figure 3), the shutter 9 is separate from the valve seat 10 creating a passage opening 12 having a crown-shaped section; consequently, the hydrogen which is injected through the injection nozzle 3 has at the outlet an internally hollow conical shape. In other words, the electromagnetic actuator 6 is configured to move the shutter 9 between the closed position (illustrated in Figure 2) of the injection valve 7, in which the shutter 9 is pressed against the valve seat 10, and the open position (illustrated in Figure 3) of the injection valve 7, in which the shutter 9 is separate from the valve seat 10 for creating the passage opening 12 through which the hydrogen flows.

According to a preferred embodiment illustrated in the accompanying Figures, the shutter 9 has: an initial portion which is coupled to the valve seat 10 and has, along the longitudinal axis 2, a progressively increasing outer diameter, an intermediate portion having, along the longitudinal axis 2, a substantially constant outer diameter, and an end portion which is closer to injection nozzle 3 and has, along the longitudinal axis 2, a progressively decreasing outer diameter.

According to what is illustrated in Figures 2 and 3, the fuel injector 1 comprises an elastomeric material (namely, a natural or synthetic polymer having the behavior of elastic rubber) gasket 13 which is attached to the support body 4 and is arranged at the injection valve 7 to obtain the valve seat 10; namely, in the closed position (illustrated in Figure 2), the shutter 9 rests against an outer surface of the gasket 13 so as to make the seal and thus prevent hydrogen from outflowing.

According to what is illustrated in Figures 2 and 3, the fuel injector 1 comprises an end-of-stroke system 14 which is separate from and independent of the gasket 13 and determines the closed position (illustrated in Figure 2) stopping the stroke of the shutter 8 pushed by the closing spring 11; in other words, the stroke of the needle 8 which moves due to the thrust exerted by the closing spring 11 does not stop because of the contact between the shutter 9 and the gasket 13 (which defines the valve seat 10), but it stops because of the contact occurring in the end-of-stroke system 14. The end-of-stroke system 14 is calibrated so that, in the closed position (illustrated in Figure 2), namely, in the position in which the end-of-stroke system 14 stops the movement of the needle 8, the shutter 9 is in contact with the gasket 13 (which defines the valve seat 10) and elastically compresses the gasket 13 to ensure the necessary seal.

The end-of-stroke system 14 comprises an abutment member 15 integral with the needle 8, and an abutment member 16, which is integral with the support body 4, faces the abutment member 15 and comes into contact with the abutment member 15 to stop the movement of the needle 8.

According to a preferred embodiment illustrated in the accompanying figures, the end-of-stroke system 14 is not adjacent to the gasket 13; in other words, the end-of-stroke system 14 is arranged at an axial distance (namely, measured along the longitudinal axis 2) other than zero from the gasket 13 to be axially spaced apart from the gasket 13. Since the end-of-stroke system 14 is not adjacent to the gasket 13, the portion of the support body 4 in the zone of the gasket 13 (namely, in the zone of the valve seat 10 of the injection valve 7) can be designed (optimized) to ensure the best passage flow of the hydrogen and the sealing diameter of valve seat 10 can be larger; in other words, since at the valve seat 10 defined by the gasket 13 there are no shape or size constraints due to the end-of-stroke system 14 (since the end-of-stroke system 14 is far from the gasket 13), there is greater design freedom for making the zone of the gasket 13 (namely, the zone of the valve seat 10 of the injection valve 7) so as to ensure the best passage flow of the hydrogen and so as to increase the sealing diameter of the valve seat 10.

In the above-described embodiment, reference was made to the injection of hydrogen, but the injector 1 can be utilized to inject any other type of gaseous fuel such as, for example, methane.

The embodiments described herein can be combined with one another.

The above-described fuel injector 1 has numerous advantages.

Firstly, the above-described fuel injector 1 ensures a perfect seal even in the long term. This result is obtained thanks to the presence of the gasket 13, which being elastically compressed by the shutter 9 in the closed position (illustrated in Figure 2) self-adapts to the shape of the shutter 9 hermetically sealing the entire contact area.

Furthermore, the above-described fuel injector 1 has a very long service life. This result is obtained thanks to the fact that the stroke of the needle 8 towards the closed position (illustrated in Figure 2) is stopped by the end-of-stroke system 14 without exceedingly stressing (and thus wearing) the gasket 13. In other words, the presence of the end-of-stroke system 14 avoids exceedingly stressing the gasket 13 by discharging on the gasket 13 all the kinetic energy possessed by the movable unit (the needle 8 and the shutter 9 being part thereof).

Finally, the above-described fuel injector 1 results to be simple and cost-effective to produce since it has few constructive differences which are easy to manufacture with respect to a similar known hydrogen (fuel) injector.

### LIST OF THE REFERENCE NUMERALS OF THE FIGURES

- 1: fuel injector
- 2: longitudinal axis
- 3: injection nozzle
- 4: support body
- 5: feeding channel
- 6: electromagnetic actuator
- 7: injection valve
- 8: needle
- 9: shutter
- 10: valve seat
- 11: closing spring
- 12: passage opening
- 13: gasket
- 14: end-of-stroke system
- 15: abutment member
- 16: abutment member
- E: internal combustion engine

## Claims

1. A fuel injector (1) for a gaseous fuel and comprising:
an injection nozzle (3);
a support body (4) with a tubular shape, which has a longitudinal axis (2) and is provided therein with a feeding channel (5) ending in the injection nozzle (3);
an injection valve (7) configured to adjust the gaseous fuel flow through the injection nozzle (3) and provided with a movable shutter (9) arranged outside the support body (4) and with a valve seat (10);
an actuator (6), configured to move the shutter (9) between a closed position of the injection valve (7), in which the shutter (9) is pressed against the valve seat (10), and an open position of the injection valve (7), in which the shutter (9) is separate from the valve seat (10) to create a passage opening (12) through which the gaseous fuel flows;
a needle (8) which supports the shutter (9);
an elastomeric material gasket (13), which is arranged at the injection valve (7) to obtain the valve seat (10) and comes into contact with the shutter (9) in the closed position of the injection valve (7); and
an end-of-stroke system (14), which determines the closed position and is separate from and independent of the gasket (13);
the fuel injector (1) is **characterized in that:**
the end-of-stroke system (14) is coupled to the needle (8) and is arranged at an axial distance, namely measured along the longitudinal axis (2), other than zero from the gasket (13) to be farther from the injection nozzle (3) with respect to the gasket (13); and
the end-of-stroke system (14) in each position does not interrupt the feeding channel (5) and thus does not prevent the gaseous fuel from flowing along the feeding channel (5) towards the injection nozzle (3) passing alongside the end-of-stroke system (14).

2. The fuel injector (1) according to claim 1, wherein the end-of-stroke system (14) is calibrated so that, in the closed position, the shutter is in contact with the gasket (13) and elastically compresses the gasket (13).

3. The fuel injector (1) according to claim 1 or 2, wherein the end-of-stroke system (14) is configured to stop a movement of the shutter (9) regardless of the contact of the shutter (9) against the gasket (13) which defines the valve seat (10).

4. The fuel injector (1) according to claim 1, 2 or 3, wherein the end-of-stroke system (14) comprises a first abutment member (15) integral with the needle (8), and a second abutment member (16), which is integral with the support body (4), faces the first abutment member (15) and comes into contact with the first abutment member (15) to stop the movement of the needle (8).

5. The fuel injector (1) according to claim 4, wherein the two members (15, 16) of the end-of-stroke system (14) are arranged inside the feeding channel (5) and occupy only partially the feeding channel (5) so that in each position the fuel is free to flow along the feeding channel (5) towards the injection nozzle (3) passing alongside the end-of-stroke system (14).

6. The fuel injector (1) according to any of claims 1 to 5, wherein:
the actuator (6) comprises a closing spring (11) configured to push the shutter (8) towards the closed position; and
the end-of-stroke system (14) is configured to stop the stroke of the needle (8) pushed by the closing spring (11).

7. The fuel injector (1) according to claim 6, wherein the stroke of the needle (8), which moves due to the thrust exerted by the closing spring (11), does not stop because of the contact between the shutter (9) and the gasket (13), but it stops because of the contact occurring in the end-of-stroke system (14).

8. The fuel injector (1) according to one of claims 1 to 7, wherein the shutter (9) has a bulb-like shape and comprises:
an initial portion which is coupled to the valve seat (10) and has, along the longitudinal axis (2), a progressively increasing outer diameter;
an intermediate portion having, along the longitudinal axis (2), a constant outer diameter; and
an end portion, which is closer to the injection nozzle (3) and has, along the longitudinal axis (2), a progressively decreasing outer diameter.

9. The fuel injector (1) according to one of claims 1 to 8, wherein the shutter (9) is arranged on the outside of the support body (4) and, in order to shift from the closed position to the open position of the injection valve (7), it moves towards the outside of the support body (4) in a same direction of movement as a fuel feeding direction.

10. The fuel injector (1) according to one of claims 1 to 9, wherein the end-of-stroke system (14) is not adjacent to the gasket (13).
